# EUROPEAN PATENT SPECIFICATION

(11) **EP 1 693 575 B1**
(45) Date of publication and mention of the grant of the patent: **10.11.2010**
(21) Application number: 06445003.4
(22) Date of filing: 16.02.2006
(51) Int. Cl.: F16B 7/22

(54) **Connecting device for profile elements**
Verbindungselement für Profilelemente
Dispositif de connexion pour éléments profilés

(30) Priority: 18.02.2005 SE 0500391
(43) Date of publication of application: 23.08.2006
(73) Proprietor: HL DISPLAY AB, 128 34 Skarpnäck (SE)
(72) Inventor: Krouwel, Ruben, 784 55 Borlänge (SE)
(74) Representative: Wennborg, Johan

(56) References cited:
- WO-A1-2006/000760
- DE-A1- 19 855 928
- US-A- 3 612 585
- US-A- 4 867 596

## Description

### Background and scope of the invention

The invention relates to a connecting device for joining together elongated profile elements according to the preamble to Claim 1.

The invention also relates to a system for constructing frameworks, which system comprises two elongated profile elements and such a connecting device.

In, for example, convenience goods stores, various types of framework are used to support and display various information carriers, such as posters, placards, samples, decorations and three-dimensional advertisements. The frameworks are often constructed on site in the premises where they are to be used, by joining together a number of different standard components. The standard components can consist of elongated profile elements, for example of aluminium, and various connecting devices for joining the profile elements together. The profile elements can have tracks that are open at the top, in which suspension devices can be mounted. These suspension devices can be attached to the ceiling of the premises, so that the connected profile elements form a horizontal framework that is suspended below the ceiling. The profile elements can also comprise tracks that are open at the bottom, in which information carriers can be inserted and attached, either directly or by means of fixing devices. The horizontal frameworks can thus be used to hang up information notices in suitable locations in the premises, for example above frozen food display units, product displays or aisles. The elongated profile elements and the connecting devices can also be used to join together vertical frameworks that can be stood on the floor, attached to a wall or suspended from the ceiling, in suitable locations in the premises. Such vertical frameworks can also be used for attaching and displaying information carriers or the like.

As the frameworks are used in different premises where they are to be assembled on site, it is desirable for the profile elements and the connecting devices to enable there to be great variation in the possible physical configurations of the frameworks that are to be constructed using these standard components. In addition, it is desirable that this variation can be achieved with as few different types of standard component as possible. This is because it is complicated, expensive and time-consuming to store and handle many different types of component. In addition, it is desirable for the components to be simple to assemble, for the components to be inherently stable and strong, and for the connections that are made between the components to be stable and strong, so that stable and strong frameworks can be constructed in a simple way. Additional desirable characteristics of the components are that they should be simple and inexpensive to manufacture and aesthetically pleasing, and that the frameworks that are constructed using the components should provide an aesthetically pleasing overall impression.

### Prior art

The prior art comprises a number of different profile elements and connecting devices for joining together the profile elements into frameworks. Examples of such connecting devices are connectors for joining together two profile elements in line with each other, corner pieces for joining together two profile elements at an angle to each other and T-pieces for joining together three profile elements into a T-formation. Common to all these previously known connecting devices is that they are normally assembled with the respective profile elements by inserting the ends of the profile elements into the connecting device.

US 4,867,596 describes a connecting device for joining together elongated profile elements that are arranged at right angles to each other. The connecting device comprises a gripping part that is designed to surround a profile element and an insertion part that is designed to be inserted in a second profile element. The connecting device is attached to the respective profile elements by a friction connection that is achieved by a screw connection.

As with the other known connecting devices mentioned above, the device described in US 4,867,596 has a serious disadvantage, as the angle that the profile elements assume in relation to each other after they have been joined together is permanently defined by the connecting device. With the connecting devices that are described, it is thus not possible to join profile elements together at any other angle in relation to each other than precisely the single angle that is determined by the connecting device. This is a serious restriction on the flexibility with which the profile elements can be assembled.

As the frameworks that are constructed using the profile elements and the connecting devices must normally be adapted to fit the premises in question, it is often desirable for the profile elements comprised in the framework to be at many different angles in relation to each other. According to previously known technology, it is thus necessary to use a number of different types of connecting device, corresponding to the various angles that are required. This is a serious problem, as a corresponding number of different types of connecting device must be obtained and stored, which of course involves complicated handling and storage and relatively high costs. In addition, it is often not possible to know in advance which angles will be required, for which reason a larger number of different connecting devices must be obtained in order to make it possible to assemble the required framework. Alternatively, available connecting devices can be used to construct a possible framework, which will then not have the required optimal design as far as function and/or appearance are concerned.

### Brief description of the invention

An object of the invention is therefore to provide a connecting device that makes possible great flexibility in the joining together of elongated profile elements.

Another object is to achieve such a connecting device, by means of which the assembled profile elements can assume any required angle within a wide range of angles.

An additional object is to provide such a connecting device, by means of which the angle between the profile elements can be fixed at a predetermined value.

Yet another object is to achieve such a connecting device, by means of which it is possible to join together the profile elements in a simple, flexible and aesthetically pleasing way.

An additional object is to achieve such a connecting device, by means of which many different connection configurations can be achieved with one and the same connecting device.

Yet another object is to provide such a connecting device, by means of which a stable and strong connection can be achieved between the profile elements.

These and other objects are achieved according to the invention by means of a connecting device of the type described in the preamble to Claim 1, which connecting device has the special technical features as defined in the characterizing part of the claim.

As a result of the hinge arranged in such a way on the insertion part of the connection, when the insertion part is in the partially-inserted position, the second profile element can assume any required angle in relation to the first profile element. The invention thus makes possible great flexibility when profile elements are joined together, as one and the same connecting device can be used to join profile elements together with any angle between them. In the fully-inserted position, the invention makes it possible, in addition, for the profile elements to be connected rigidly at a predetermined angle.

In addition, the gripping part of the connecting device enables the connecting device to be located at any position along the first profile element. It is thus not necessary to cut the first profile element or to arrange special fixing means such as screw holes or the like at a position along the first profile element where the connecting device is to be located. In addition, the insertion part enables this part to be completely or partially concealed by the profile element, which, among other things, improves the aesthetic overall impression of the framework that is created.

The insertion part of the connecting device suitably comprises a locking device for fixing the axial position of the insertion part in the second profile element. By this means, it is ensured that the selected insertion position, corresponding to a flexible or locked hinge, is maintained when assembling and using the framework. In order to facilitate adjustment of the connecting device to the inserted position, that is the locking position, the insertion part can have a stop against which the end surface of the second profile element rests in order to define the said position.

According to a particularly advantageous embodiment, the gripping part is displaced in a lateral direction in relation to the principal central axis of the insertion part. This enables two connecting devices that are pointing in opposite directions to be arranged alongside each other on one and the same first profile element so that the respective second profile elements of the two connecting devices are in line with each other. Among other things, this has aesthetic benefits, as frameworks with profile elements that are arranged in line provide a more harmonious overall impression and as the connection point between the three profile elements is less obtrusive with such a linear arrangement.

The angle between the principal central axis of the insertion part and the central axis of the gripping part, which angle corresponds to the angle between the first and second profile elements when the insertion part is in its fully-inserted locking position, can be selected freely and is determined during the manufacture of the connecting device. As a commonly occurring angle between a first and a second profile element for the construction of frameworks is 90°, the connecting device is suitably designed so that the said angle between the principal central axis of the insertion part and the central axis of the gripping part is 90°. In order to enable fixing of the insertion part to the second profile element to be carried out in a simple and reliable way, the locking device of the insertion part suitably comprises a flexible tongue and means, such as a screw connection, an eccentric or a wedge, for pressing the tongue into frictional engagement with the second profile element.

The gripping part suitably comprises a principally U-shaped part that can be brought into engagement with the first profile element by being put onto this in a radial direction in relation to the profile element. In this way, the gripping part of the connecting device does not need to be threaded onto the first profile element in an axial direction from one end of the profile element. The ability to attach the gripping part in a radial direction makes it considerably easier subsequently to mount connecting devices onto already-assembled first profile elements. The U-shaped part is suitably flexible, to enable the gripping part to be snap-fitted around the first profile element. Such snap-fitting of the gripping part can, in certain cases, constitute an adequate fixing of the gripping part to the first profile element. In such cases, the flexibility of the U-shaped part enables the gripping part of the connecting device to be mounted on the first profile element in a very simple way. In the event that additional fixing of the gripping part to the first profile element is required, the snap-fitting enables the connecting device to be held on the first profile element in such a way that it can be moved, in order to make it possible to adjust the axial position of the connecting device along the first profile element before the selected position is fixed. In order to achieve such a fixing of the axial position of the gripping part on the first profile element, the gripping part suitably comprises a locking device.

The invention also relates to a system for constructing frameworks, which system comprises a first and a second elongated profile element and a connecting device according to any one of Claims 1-9.

### Brief description of drawings

In the following, an exemplifying embodiment of the invention is described with reference to the attached drawings, in which:
Figure 1 is a perspective view of a system according to the invention, comprising three profile elements that are joined together by two connecting devices according to the invention.
Figure 2 is a perspective view of a first and a second profile element that are joined together by a device according to the invention.
Figure 3 is a side view of the profile elements and the connecting device shown in Figure 2.
Figure 4 is a section along the line C-C in Figure 3.
Figures 5 and 6 are perspective views of the connecting device and the second profile element shown in Figure 2, with Figure 5 showing the connecting device in a partially-inserted position and Figure 6 showing the fully-inserted position.
Figure 7 is a plan view from above of the system shown in Figure 1, where the two second profile elements assume different angles in relation to the first profile element.
Figures 8 and 9 are perspective views of the connecting device when it is arranged on a first profile element, with Figure 8 showing a locking device in the withdrawn position and Figure 9 showing the locking device in its inserted position in the gripping part.
Figure 10 is a side view of the connecting device and the first profile element shown in Figure 9.

### Detailed description of an embodiment

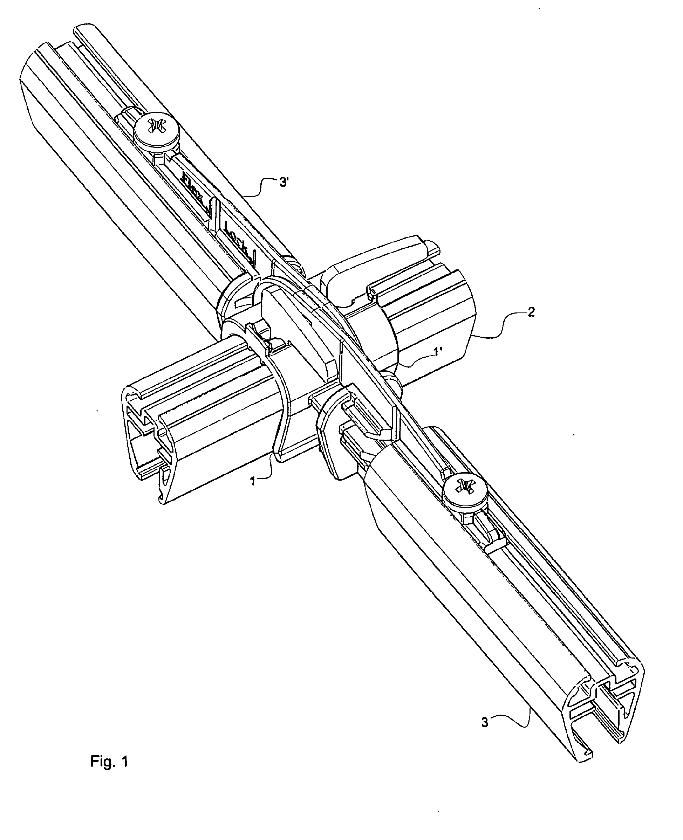

Figure 1 shows a system for constructing frameworks according to the invention. The system comprises two connecting devices 1, 1', a first elongated profile element 2 and two second profile elements 3, 3'. The connecting devices 1, 1' join together the first profile element 2 and the two second profile elements 3, 3'. The figure shows the system when the two second profile elements 3, 3' are arranged at right angles to the first profile element 2. In the example shown, the connecting device 1' is in a fully-inserted position in the profile element 3', while the connecting device 1 is only partially inserted in the profile element 3. As will be described in greater detail below, the angle between the profile elements 2 and 3' is thereby fixed, while the angle between the profile elements 2 and 3 can be varied.

It will be recognized that the system can comprise several first profile elements, several second profile elements and several connecting devices, that together form a framework, which framework can assume any required geometrical design and configuration.

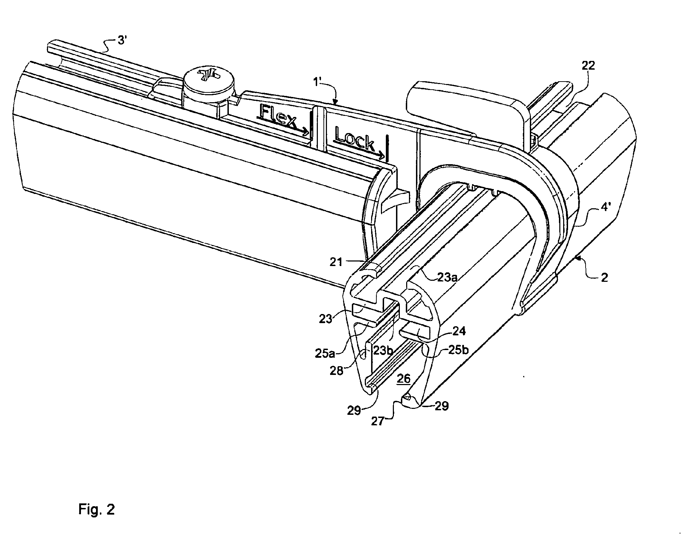

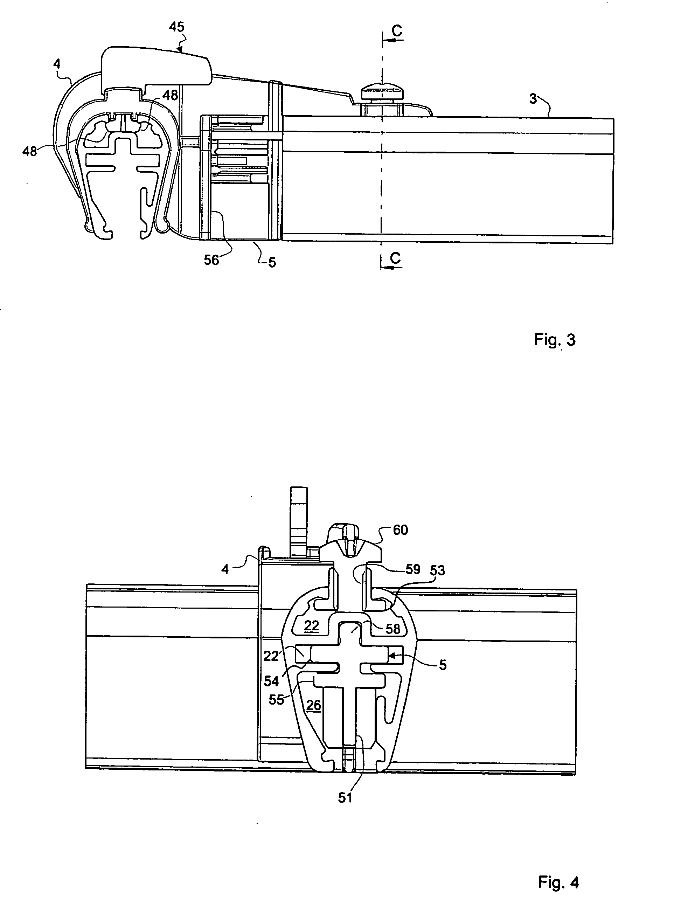

The connecting device 1' shown in Figure 1 is shown again in Figure 2. As shown in Figure 2, the connecting device 1' comprises a gripping part 4' that grips around the first profile element 2. The first profile element 2 consists of an extruded aluminium profile. The figure shows the cross-sectional geometry of this second profile element 2 and, by a comparison with, for example, Figure 4 and Figure 1, it can be seen that all the profile elements comprised in the system have the same cross-sectional geometry.

The cross section of the profile elements has a general external U-shape that tapers towards the ends of the side walls, and the bottom of the U that faces upwards in the figure has a slot that constitutes the opening in a first channel 22 that is open at the top. The channel 22 is delimited at the bottom by a dividing wall 23 that connects the side walls of the general U-shape of the profile element and that has a central raised part 23a that has a surface that faces upwards that is centred below the slot 21. A second channel 24 that is open at the bottom is arranged below the first channel. The second channel 24 is delimited at the top by the dividing wall 23. The second channel 24 is delimited in a lateral direction by the side walls of the cross section and at the bottom by two flanges 25a, 25b that project towards each other from each side wall. A third channel 26, that is open both at the top towards the second channel 24 and at the bottom, extends below the second channel 24. The opening in the third channel 25 that faces downwards consists of a slot 27 that is formed between the free ends of the side walls of the cross section. In addition, a hook-shaped flange 28 is arranged on one side wall, which flange projects inwards and upwards in the third channel 26.

When the profile elements are used to construct horizontal frameworks that are suspended in a premises, the upper channel 22 of the profile elements can receive suspension devices (not shown) that, for example, are joined to wires or the like, that are attached to the ceiling of the premises in question. The third channel 26 in the profile elements, that is open at the bottom, can be used for attaching information carriers such as labels, placards and the like, whereby suitable fixing devices that are arranged on the upper edge of the information carriers can be brought into engagement with longitudinal grooves 29 that are arranged on the inside of the side walls in the vicinity of the slot 27 or with the hook-shaped flange 28.

The connecting device according to the invention will now be described, with reference to Figures 3-6, 9 and 10. As mentioned above, the connecting device comprises a gripping part 4 and an insertion part 5. The gripping part 4 has a tapering U-shape that corresponds to the tapering U-shape of the cross section of the profile elements. The gripping part 4 is flexible, so that its two shanks 41 can be snap-fitted around the profile elements. An elongated opening 42 is made through a central part where the two shanks 41 are joined together, which central part corresponds to the bottom of the U-shape. The opening 42 extends parallel to the central axis of the gripping part, that is an axis that runs parallel to the longitudinal direction of the first profile element when the gripping part 4 is arranged on the first profile element.

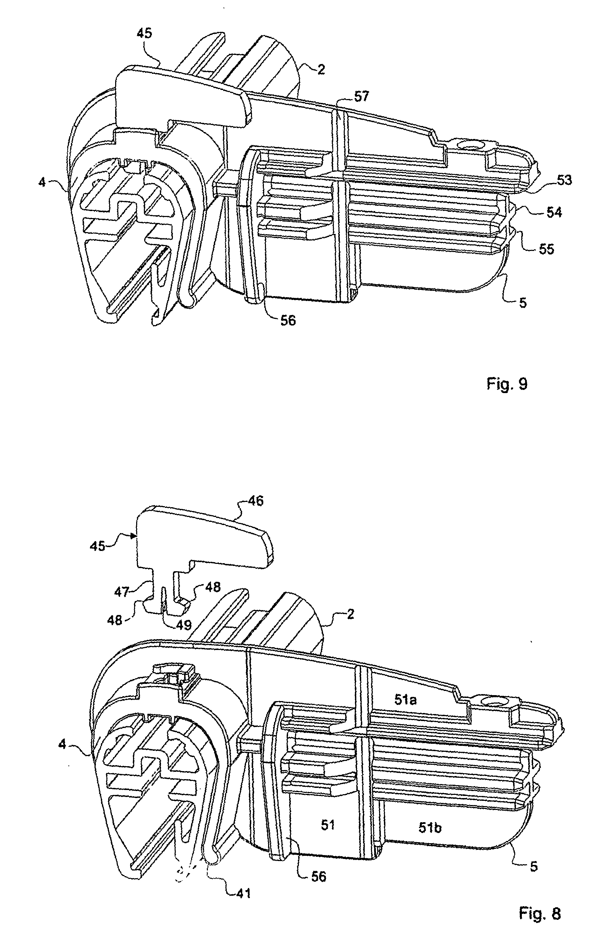

Figures 8 and 9 show how a locking device in the form of an engagement catch 45 can be inserted through the opening 42 to achieve fixing of the gripping part 4 on the first profile element 2. The locking catch 45 comprises a handle part 46 and an engagement part 47 with two engagement lugs 48 that face in opposite directions. The engagement part 47 has, in addition, a slot 49 that enables the lugs 48 to be pressed towards each other in a sprung way. By turning the locking catch 45 so that the lugs 48 extend parallel to the opening 42, the engagement part 47 can be inserted through the opening 42. The locking catch 45 is then snap-fitted to the gripping part 4 by means of the engagement of the lugs 48 with the inside of the gripping part 4, around the opening 42. In this position of the locking catch 45, the engagement lugs 48 extend parallel to the upper first channel 22 of the profile element 2. The gripping part 4 is then free to be moved along the profile element 2 in order to be adjusted to the required axial position. When the required position has been assumed, the locking catch 45 can be turned a quarter turn in either direction, whereby the engagement lugs 48 are brought into engagement with the profile element 2, so that the axial position of the gripping part 4 on the profile element 2 is fixed by friction locking. If the position of the gripping part on the profile element 2 needs to be readjusted, the friction locking is released in a simple way by turning the locking catch 45 again so that the engagement lugs 48 assume a position parallel to the upper first channel 22.

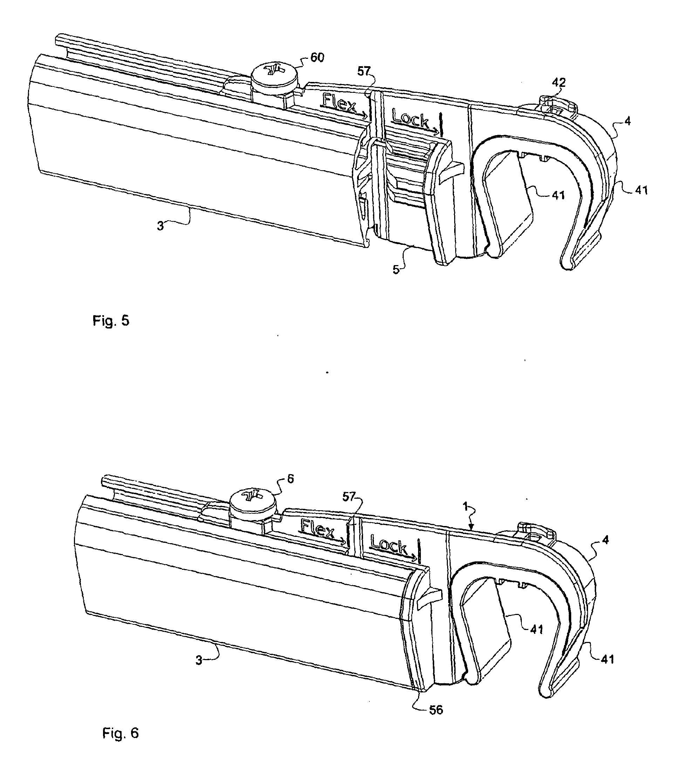

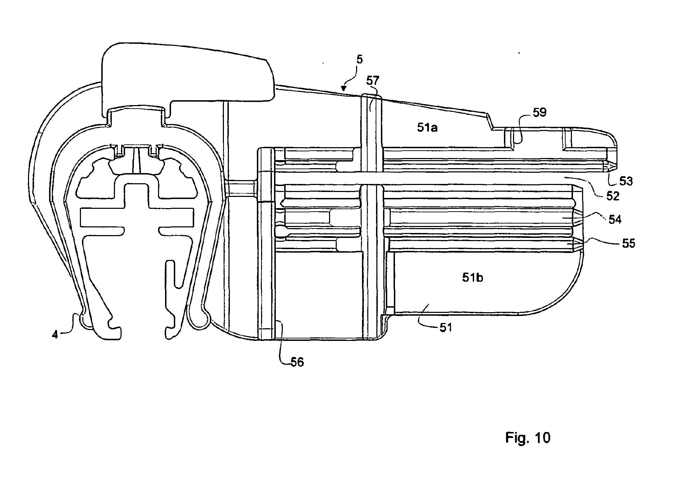

The connecting device also comprises an insertion part 5 (see Figures 9 and 10) that can be inserted from the end of a second profile element 3, (see Figure 5) in this profile element. The insertion part 5 has a central plate 51 that extends along the plane of symmetry of the second profile element 3, when the insertion part 5 is inserted in the profile element 3. The central plate 51 is divided into an upper 51a and a lower 51b plate part by a slot 52 that extends in the axial direction of the insertion part 5 and the second profile element 3. Three flanges 53, 54, 55 project from both sides of the plate 51 and extend along the full length of the insertion part. When the insertion part 5 is inserted in the second profile element, these flanges are received by the first 22, second 24 and third 26 channels of the profile element respectively. The engagement part 5 is delimited in the direction towards the gripping part 4 by a contact flange 56 that projects on both sides of the central plate 51, against which the end surface of the second profile element 2 rests when the insertion part is in the fully-inserted position in the second profile element 3. A short distance in from the contact flange 56, the insertion part 5 has a hinge 57 that extends at right angles to the axial direction of the insertion part and that consists of a break in the flanges 53, 54 and 55 and an area where the thickness of the material is reduced at both sides of the central plate 51. The connecting device is made of a flexible polymer material, so that the hinge can be bent without a risk of the material breaking or failing due to repeated stress.

Figure 6 shows how the connecting device is fully inserted in the second profile element 3 with the end surface of the profile element having come into contact with the contact flange 56. In this position, the hinge 57 is locked, that is prevented from being bent, by a part 58, that projects from the axial flange 54 towards the slot 52, being received with a close tolerance in a projecting part of the second channel 24 of the profile element (see Figure 4), on both sides of the hinge 57. The angle of the second profile element 2 in relation to the axial direction of the gripping part 4 and thus to the first profile element 3 is thereby fixed at 90°, as shown in Figure 2.

Figure 5 shows the insertion part 5 in its partially-inserted position in the second profile element 3. As shown in the figure, the hinge 57 is then located outside or in line with the end of the profile element 3. As the projecting part 58 of the central plate 51 between the contact flange 56 and the hinge 57 is not then received in the projecting part of the channel 24 of the profile element, the part of the insertion part 5 that is inserted in the profile element 3 can be rotated around the hinge 57, in relation to the part of the insertion part that is not inserted and the gripping part and the first profile element (which first profile element is not shown in Figure 5). In this partially-inserted position of the insertion part, the second profile element 3 can thus be rotated around the hinge 57 to any angular position within a wide range.

The axial position of the insertion part 5 in the second profile element 3 can be fixed by means of a locking device that consists of the upper axial flange 53 of the insertion part. By means of a screw 60 that is received in a threaded opening 59 through the upper plate part 51a of the insertion part 5 and that rests against the upper surface 23a of the dividing wall 23 of the profile element, the flange 53 can be pressed up to make contact with the inner surface of the profile element on both sides of the upper plate part 51a, in the vicinity of the upper slot 21. In this way, a friction lock is achieved, by means of which the insertion part 5 can be fixed to the second profile element 2 in the partially-inserted position shown in Figure 5 or in the fully-inserted position shown in Figure 6.

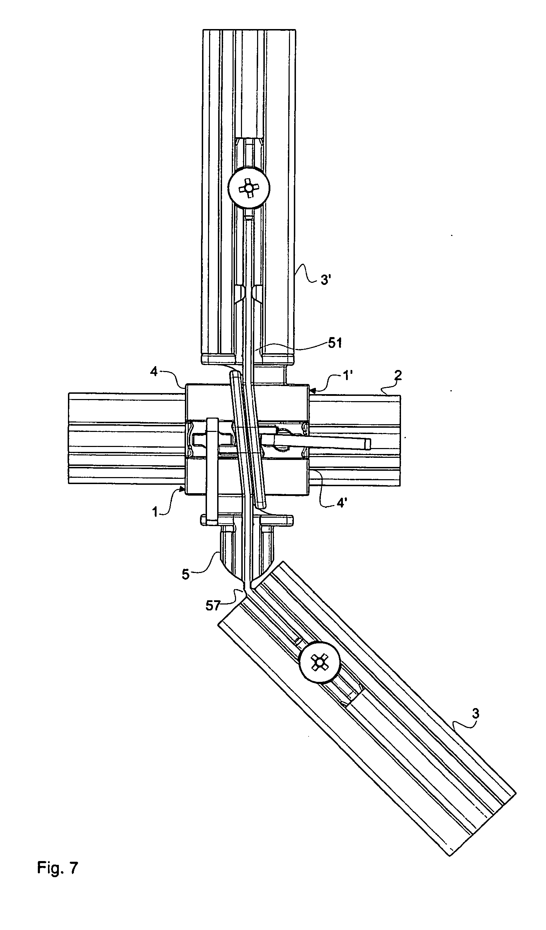

Figure 7 shows a system according to the invention where two identical connecting devices 1, 1' according to the invention are arranged alongside each other on a common first profile element 2. As shown in the figure, the gripping parts 4, 4' are displaced in a lateral direction in relation to the principal central axis of their respective insertion parts 5, 5', which central axis extends along the respective second profile elements 3, 3', when the insertion parts 5, 5' are in the fully-inserted position. As shown clearly in Figure 1, this means that the two profile elements 3, 3' are arranged in line with each other, when the profile elements have assumed an angular position that corresponds to the locked position.

Figure 7 shows, however, how only one 3' of the two second profile elements 3, 3' has assumed its locked position by the insertion part 5' being in the fully-inserted position, while the second profile element 3 has been rotated to an angle of approximately 45° in relation to the first profile element 2, as a result of the insertion part 5 being in its partially-inserted position in the profile element 3.

The invention has been described above using an exemplifying embodiment. It will be recognized, however, that the invention is not limited to this, but that it can be varied freely within the framework of the following patent claims.

## Claims

1. Connecting device for joining together elongated profile elements comprising a gripping part (4) designed to grip around a first profile element (2) and an insertion part (5) designed to be inserted in a second profile element (3, 3') from one end, which second profile element is arranged at an angle to the first profile element, **characterized in that** the insertion part (5) comprises a hinge (57) that is arranged at a distance from both ends of the insertion part, so that the hinge is inside the second profile element (3, 3') when the insertion part is in a fully-inserted position to lock the hinge and outside the second profile element when the insertion part is in a partially-inserted position to allow rotation of the second profile element around the pivot axis of the hinge.

2. Connecting device according to Claim 1, in which the insertion part (5) comprises a locking device, by means of which the axial position of the insertion part in the second profile element (3, 3') can be fixed at different degrees of insertion.

3. Connecting device according to any one of Claims 1-2, in which the insertion part (5) comprises a stop (56) that interacts with the end surface of the second profile element (3, 3') in order to define the fully-inserted position.

4. Connecting device according to any one of Claims 1-3, in which the gripping part (4) is displaced in a lateral direction in relation to the principal central axis of the insertion part (5), so that two second profile elements (3, 3') that are arranged opposite to each other and that are connected to one and the same first profile element (2) by means of respective connecting devices, can be arranged in line with each other.

5. Connecting device according to any one of Claims 1-4, in which the principal central axis of the insertion part (5) is essentially perpendicular to the central axis of the gripping part (4).

6. Connecting device according to any one of Claims 2-5, in which the locking device comprises a flexible tongue (53) and means (66) for pressing the tongue into frictional engagement with the second profile element (3, 3').

7. Connecting device according to any one of Claims 1-6, in which the gripping part (4) comprises a generally U-shaped part that can be put on the first profile element (2) in a radial direction.

8. Connecting device according to Claim 7, in which the generally U-shaped part is flexible in order to permit snap-fitting of the gripping part (4) around the first profile element (2).

9. Connecting device according to any one of Claims 1-6, in which the gripping part (4) comprises locking means (45) for fixing the axial position of the gripping part on the first profile element (2).

10. System for the construction of frameworks, comprising a first (2) and a second (3, 3') elongated profile element and a connecting device (1) according to any one of Claims 1-9.

## Patentansprüche

1. Verbindungsvorrichtung zum Miteinanderverbinden von gestreckten Profilelementen, die ein Greifteil (4) umfassen, welches zum Greifen um ein erstes Profilelement (2) gestaltet ist, und ein Einfügeteil (5) umfassen, welches zum Einfügen in ein zweites Profilelement (3, 3') von einem Ende gestaltet ist, wobei das zweite Profilelement mit einem Winkel zu dem ersten Profilelement angeordnet ist, **dadurch gekennzeichnet, dass** das Einfügeteil (5) ein Gelenk (57) umfasst, welches mit einem Abstand von beiden Enden des Einfügeteils angeordnet ist, so dass sich das Gelenk innerhalb des zweiten Profilelements (3, 3') befindet, wenn das Einfügeteil in einer vollständig eingefügten Position ist, um das Gelenk zu sperren, und sich außerhalb des zweiten Profilelements befindet, wenn das Einfügeteil in einer teilweise eingefügten Position ist, um die Rotation des zweiten Profilelements um die Drehachse des Gelenks zu ermöglichen.

2. Verbindungsvorrichtung nach Anspruch 1, in welcher das Einfügeteil (5) eine Verriegelungsvorrichtung umfasst, mittels derer die axiale Position des Einfügeteils in dem zweiten Profilelement (3, 3') bei verschiedenen Einfügegraden fixiert werden kann.

3. Verbindungsvorrichtung nach irgendeinem der Ansprüche 1-2, in welcher das Einfügeteil (5) einen Stopper (56) umfasst, der mit der Endoberfläche des zweiten Profilelements (3, 3') zusammenwirkt, um die vollständig eingefügte Position zu definieren.

4. Verbindungsvorrichtung nach irgendeinem der Ansprüche 1-3, in welcher der Greifteil (4) in einer lateralen Richtung in Bezug auf die Hauptmittelachse des Einfügeteils (5) versetzt ist, so dass zwei zweite Profilelemente (3, 3'), die einander gegenüber angeordnet sind und die mit ein und demselben ersten Profilelement (2) mittels entsprechender Verbindungsvorrichtungen verbunden sind, aneinander ausgerichtet angeordnet werden können.

5. Verbindungsvorrichtung nach irgendeinem der Ansprüche 1 - 4, in welcher die Hauptmittelachse des Einfügeteils (5) im wesentlichen senkrecht zu der Mittelachse des Greifteils (4) ist.

6. Verbindungsvorrichtung nach irgendeinem der Ansprüche 2 - 5, in welcher die Verriegelungsvorrichtung eine flexible Zunge (53) und Mittel (66) zum Drücken der Zunge in einen Reibungseingriff mit dem zweiten Profilelement (3, 3') umfasst.

7. Verbindungsvorrichtung nach irgendeinem der Ansprüche 1 - 6, in welcher das Greifteil (4) ein üblicherweise U-förmiges Teil umfasst, das in das erste Profilelement (2) in einer radialen Richtung gesteckt werden kann.

8. Verbindungsvorrichtung nach Anspruch 7, in welcher das üblicherweise U-förmige Teil flexibel ist, um eine Schnapp-Passung des Greifteils (4) um das erste Profilelement (2) zu ermöglichen.

9. Verbindungsvorrichtung nach irgendeinem der Ansprüche 1 - 6, in welcher das Greifteil (4) Verriegelungsmittel (45) zur Fixierung der axialen Position des Greifteils des ersten Profilelements (2) umfasst.

10. System zur Konstruktion von Tragwerken, umfassend ein erstes (2) und ein zweites (3, 3') gestrecktes Profilelement und eine Verbindungsvorrichtung (1) nach irgendeinem der Ansprüche 1 - 9.

## Revendications

1. Dispositif de liaison pour réunir ensemble des éléments de profilé allongés comprenant une partie d'agrippement (4) conçue pour s'agripper autour d'un premier élément de profilé (4) et une partie d'insertion (5) conçue pour être insérée dans un second élément de profilé (3, 3') depuis une extrémité, le second élément de profilé étant disposé en formant un angle par rapport au premier élément de profilé, **caractérisé en ce que** la partie d'insertion (5) comprend une charnière (57) qui est configurée à une distance par rapport aux deux extrémités de la partie d'insertion, de sorte que la charnière soit à l'intérieur du second élément de profilé (3, 3') lorsque la partie d'insertion est dans une position totalement insérée afin de verrouiller la charnière et à l'extérieur du second élément de profilé lorsque la partie d'insertion est dans une position partiellement insérée afin de permettre la rotation du second élément de profilé autour de l'axe de pivotement de la charnière.

2. Dispositif de liaison selon la revendication 1, dans lequel la partie d'insertion (5) comprend un dispositif de verrouillage, au moyen duquel la position axiale de la partie d'insertion dans le second élément de profilé (3, 3') peut être fixée selon différents degrés d'insertion.

3. Dispositif de liaison selon l'une des revendications 1 à 2, dans lequel la partie d'insertion (5) comprend une butée (56) qui interagit avec la surface d'extrémité du second élément de profilé (3, 3') afin de définir la position totalement insérée.

4. Dispositif de liaison selon l'une des revendications 1 à 3, dans lequel la partie d'agrippement (4) est déplacée dans une direction latérale par rapport à l'axe central principal de la partie d'insertion (5), de sorte que deux seconds éléments de profilé (3, 3') qui sont configurés en vis-à-vis l'un de l'autre et qui sont reliés à un seul et même élément de profilé (2) au moyen de dispositifs de liaison respectifs, puissent être disposés en ligne l'un avec l'autre.

5. Dispositif de liaison selon l'une des revendications 1 à 4, dans lequel l'axe central principal de la partie d'insertion (5) est essentiellement perpendiculaire à l'axe central de la partie d'agrippement (4).

6. Dispositif de liaison selon l'une des revendications 2 à 5, dans lequel le dispositif de verrouillage comprend une languette flexible (53) et des moyens (66) pour appuyer la languette en contact frottant avec le second élément de profilé (3, 3').

7. Dispositif de liaison selon l'une des revendications 1 à 6, dans lequel la partie d'agrippement (4) comprend une partie en forme générale de U qui peut être posée sur le premier élément de profilé (2) dans une direction radiale.

8. Dispositif de liaison selon la revendication 7, dans lequel la partie en forme générale de U est flexible afin de permettre un emboîtement par encliquetage de la partie d'agrippement (4) autour du premier élément de profilé (2).

9. Dispositif de liaison selon l'une des revendications 1 à 6, dans lequel la partie d'agrippement (4) comprend des moyens de verrouillage (45) pour fixer la position axiale de la partie d'agrippement sur le premier élément de profilé (2).

10. Système pour la construction de pièces d'encadrement, comprenant un premier (2) et un second (3, 3') éléments de profilé allongés et un dispositif de liaison (1) selon l'une des revendications 1 à 9.
